# EUROPEAN PATENT SPECIFICATION

(11) **EP 0 397 713 B1**
(45) Date of publication and mention of the grant of the patent: **01.06.1994**
(21) Application number: 89901230.6
(22) Date of filing: 22.12.1988
(51) Int. Cl.: G11B 5/187, G11B 5/48, G11B 15/62

(54) **CONTOURED HEAD ASSEMBLY FOR USE IN A CASSETTE LOADED RECORDER**
PROFILIERTE KOPFVORRICHTUNG FüR KASSETTENSPIELER
ASSEMBLAGE DE TETE PROFILE UTILISE DANS UN ENREGISTREUR A CASSETTE

(30) Priority: 28.12.1987 US 138788
(43) Date of publication of application: 22.11.1990
(73) Proprietor: EASTMAN KODAK COMPANY, Rochester, New York 14650-2201 (US)
(72) Inventor: LACEY, Christopher Allen, 343State Street,Rochester,New York 14650 (US); BROCK, George William, La Jolla, CA 92037 (US)
(74) Representative: Blickle, K. Werner, Dipl.-Ing.
(86) International application number: US8804568
(87) International publication number: WO8906420

(56) References cited:
- EP-A- 0 181 263
- US-A- 3 416 149
- IBM Technical Disclosure Bulletin, vol. 17, no. 3, August 1974, G.W. Baumann et al.: "Head Contour lapping with flexible abrasive tape"
- Patent Abstracts of Japan, vol. 9, no. 83, P348, abstract of JP 59-213013, publ 1984-12-01, Matsushita Denki Sangyo K.K.
- Patent Abstracts of Japan, vol. 9, no. 285, P404, abstract of JP 60-124052, publ 1985-07-02, Hitachi Seisakusho K.K.

## Description

### BACKGROUND OF THE INVENTION

### Field of the Invention

This invention relates to the contour of a magnetic head assembly, and in particular to a contour that provides improved contact at the magnetic head-magnetic tape interface of a cassette loaded recorder.

The invention, as well as the prior art, will be described with reference to the drawings of which:
Fig. 1 illustrates a magnetic head contour over which the invention provides improvement, and
Fig. 2 illustrates magnetic tape in contact with a magnetic head assembly having a contour in accordance with the teachings of the invention under various cassette guiding conditions,

### Description of the Prior Art

The contact between the magnetic head and the magnetic tape is crucial in determining the performance of a magnetic tape recording system. During recording it is essential that the gap of the head, which is the source of the recording flux, be in intimate contact with the tape to effect efficient signal transfer, and during playback intimate contact is essential to provide effective coupling of the magnetic field from the tape to the playback head. While adequate contact is essential at all wavelengths, it is particularly important at short recorded wavelengths due to the well known spacing loss effect which becomes increasingly severe as the wavelength decreases.

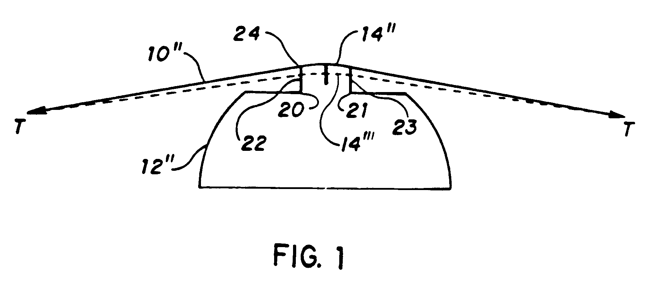

An improved head contour eliminates problems of the increase in size of the contact region and the "flying" of the tape. Referring to Fig. 1, a radiused head surface 12'' is provided with shoulders 20, 21 which define the head-tape contact region 14''. The tape 10'' engages the contact region 14'' at the edge of the plane 22 comprising one face of the shoulder 20. It remains in contact with the head while traversing the region 14'', and exits from the contact region 14'' at the plane 22 which comprises a face of the shoulder 23. The edge 24 at which the tape engages the contact region 14'' skives any entrained air which may be adherent to the tape prior to the tape contacting the head at 14''. Removal of this air layer significantly improves head/tape contact over the entire surface of the head by elimination of the air film required to support tape "flying".

Additionally, the contour of the head surface of Fig. 1 is such that the tape exerts constant pressure at all points of the head/tape contact region. The industry practice has been to set the radius of the head at about 0.125'', but, in general, at this radius the pressure of the tape is not uniformly distributed over the head surface. Experience shows that the radius and the contour of the head change as the head wears due to tape abrasiveness. It will be appreciated that in areas where the contact region experiences "high" pressure the head will wear faster than it will in areas that experience "low" pressure. The head will wear so as to assume a contour where the pressure is uniform across the entire surface. However, if the head contour is initially shaped so that all points of contact of the head surface are under identical pressure during normal operation, then head wear will be uniform over the life of the head and the contour at the region of contact 14''' will maintain the contour of the original region of contact 14''. The optimum contour has been designated as a "constant area profile" surface since it provides a constant area head/tape contact region over the life of the head. Such a head is described in European application EP-A-0346453, which has the same priority date as this application.

While the above described head contour improves head/tape contact in many applications, the constant area profile contour is still subject to a troublesome contact problem that arises in a cassette loaded recording system due to mechanical tolerances in both the cassette and in positioning the cassette in a recorder. A cassette provides a convenient and inexpensive means of interchangeably coupling magnetic tape with a recording system, and cassettes are attendantly widely used in the bulk storage of magnetic tape data. At long wavelengths, such as arise in the analog recording of music or speech, contact requirements are less critical, and inexpensive molded plastic cassettes adequately position the tape to contact the head when inserted into the recorder. At the short wavelengths and narrow track widths which are characteristic of high density digital or video recording, and when cost considerations preclude servo positioning the head over the recorded track, a precisely fabricated cassette has been required to insure a proper head/tape interface. A head assembly according to the preamble of claim 1 is known from EP-A-0181263.

### SUMMARY OF THE INVENTION

To obtain the correct tape wrap angle at the head in a cassette loaded recorder, tape guiding support "outriggers" integral with the head assembly are provided. The outriggers are located on either side of the active portion of the head structure to guide the tape and to establish the tape/head wrap angle independent of the exact locations of the cassette guides. Slots separate the active head structure from each of the outriggers, presenting an edge at each side of the head to skive any air film adherent to the moving tape as it approaches the head's transducer. Additionally, the entire head and outrigger structure is fabricated from the same or mechanically similar materials and has an overall constant area profile contour which wears at a uniform rate due to tape abrasion. 〈European Application EP-A-0373179, having the same priority date as that of this application, concerns a twin head assembly having a constant area wear profile.

### DESCRIPTION OF THE INVENTION

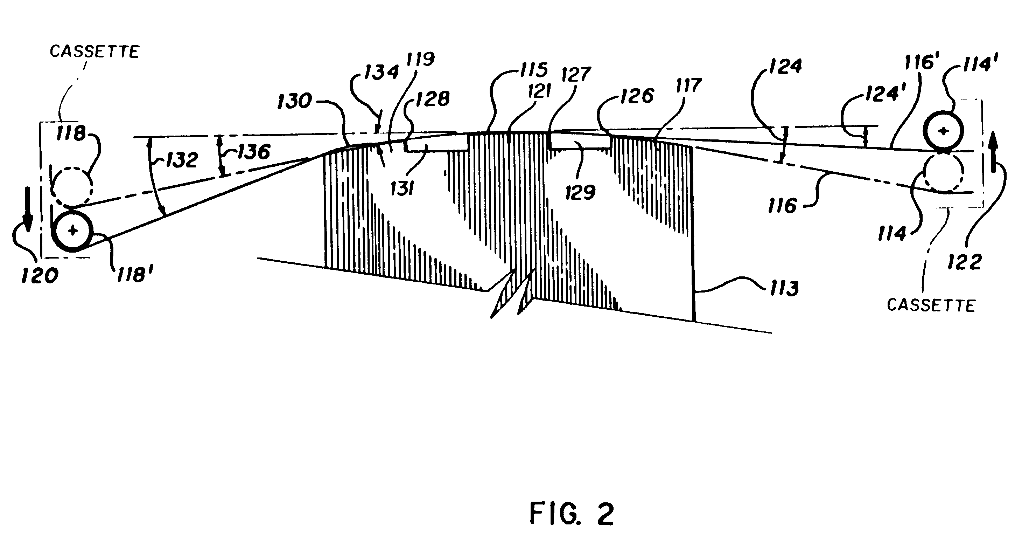

Referring to Fig. 2, the detailed geometry of a head assembly 113 fabricated in accordance with the teaching of the invention is shown in relation to cassette guides having nominal positions 114, 118 with resultant tape path 116, and displaced guide positions 118', 114' with resultant tape path 116'. (Nominal positions and the associated tape path are shown in phantom while displaced positions and associated tape path are shown in solid lines.) The head assembly 113 is comprised of a center land section 115 with an included magnetic transducing element 121 and two outriggers 117 and 119. The entire head assembly 113 has a constant area profile extending across the center land 115 and the outriggers 117, 119 as previously described. Due to tolerances in cassette construction, the position of the guide 114 is displaced in the direction of arrow 122 to the position 114'. The nominal wrap angle 124 is thereby changed to 124'. It will be noted however, even though the wrap angle 124', with which the tape path 116 approaches the outrigger 117 is reduced relative to wrap angle 124, the tape 116' remains in contact with the outrigger 117 in approaching the center land 115 and magnetic transducing element 121. The wrap angle at the magnetic head element 121 at the center land 115 continues to have the identical value that obtains when the guide position 114' is the nominal position 114. Resultantly, the contact area over the center land 115 and the magnetic transducing element 121, and the attendant magnetic head performance remains invariant because of the tape guiding by the outrigger 117 even though the guide position 114' is displaced from the nominal position 114. Similarly, when the guide position 118 is displaced as shown by arrow 120 to position 118', the nominal wrap angle 136 becomes a larger wrap angle 132 with attendant "tenting" 130. However, the "tenting" 130 occurs on the surface of the outrigger 119 and not on the head surface at the magnetic transducing element as in the prior art. The tape is again completely in contact with the outrigger 119 before reaching the outrigger corner 128, and therefore wrap angle 136 at which the tape path 116' approaches the center land 115 equals the value of wrap angle that obtains when the guide position 118' is its nominal position 118. It will be appreciated for both conditions of displacement of the cassette guide positions 114, 118, the tape path is unaffected, and tape/head contact over the magnetic transducing element 121 and the center land 115 remains constant regardless of tolerance related displacements of the cassette guides from their nominal positions.

The teachings of the invention may be applied to the magnetic head assemblies of other magnetic recorders not employing cassettes, such as reel to reel recorders or loop recorders not having precisely positioned tape guiding elements.

## Claims

1. A recording system including a magnetic transducer assembly (113) comprises:
a. means for transporting a recording medium (116) over said transducer assembly (113), said assembly having a magnetic transducing element (121) located thereon,
b. means external to said magnetic transducer assembly, for guiding (114, 118) said recording medium (116) at nominal wrap angles (124) relative to said magnetic transducing element (121),
c. an arcuate surface extending in the direction of said medium's motion, and having two slots (129, 131) therein, said slots (129, 131) dividing said surface into a first outrigger (119), a central land (115) for containing said magnetic transducing element (121) at the apex thereon, and a second outrigger (117), wherein
A) the edges (128, 126) of said slots (129, 131) prevent entrainment of air between said medium (116) and said magnetic transducing element (121),
B) said outriggers (117, 119) so position said medium (116) as to maintain said nominal wrap angles (124) substantially independent of variations in said means for guiding (114, 118), said transducer assembly (113) is characterized by:
said arcuate surface being initially shaped so that all points of the transducer assembly surface are under identical pressure during normal operation of the head, so that the wear of said transducer assembly is uniform over the life of said head and the contour at the region of transducer assembly medium contact (14''') maintains the contour of the original region of contact (14''), whereby said surface maintains a constant area profile.

2. The magnetic transducer assembly of Claim 1 wherein said outriggers (117, 119) are symmetrically located relative to said magnetic transducing element (121).

## Patentansprüche

1. Eine magnetische Wandlereinheit (113) enthaltendes Aufzeichnungssystem mit
a) Mitteln, die ein Aufzeichnungsmedium (116) über die Wandlereinheit (113) transportieren, wobei auf der Wandlereinheit ein magnetisches Wandlerelement (121) angeordnet ist,
b) außerhalb der magnetischen Wandlereinheit vorgesehenen Mitteln (114, 118), die das Aufzeichnungsmedium (116) unter Bildung von Nenn-Einschlußwinkeln (124) relativ zu dem magnetischen Wandlerelement (121) führen, und
c) einer gewölbten Fläche, die sich in der Bewegungsrichtung des Aufzeichnungsmediums erstreckt und zwei Schlitze (129, 131) enthält, die die Fläche in einen ersten Ausleger (119), einen auf seinem Scheitelpunkt das magnetische Wandlerelement (121) aufweisenden mittleren Steg (115) sowie einen zweiten Ausleger (117) unterteilen, wobei
A) die Kanten (128, 126) der Schlitze (129, 131) verhindern, daß zwischen dem Aufzeichnungsmedium (116) und dem magnetischen Wandlerelement (121) Luft mitgeführt wird, und
B) die Ausleger (117, 119) das Aufzeichnungsmedium (116) derart positionieren, daß die Nenn-Einschlußwinkel (124) unabhängig von Veränderungen bei den Führungsmitteln (114, 118) im wesentlichen unverändert bleiben,
**dadurch gekennzeichnet**, daß die gewölbte Oberfläche der Wandlereinheit (113) zunächst so geformt ist, daß die Oberfläche der Wandlereinheit während des normalen Betriebs des Kopfs an allen Punkten dem gleichen Druck unterworfen ist, so daß der Abrieb der Wandlereinheit während der Lebensdauer des Kopfes gleichmäßig erfolgt und die Kontur im Kontaktbereich (14''') von Wandlereinheit und Aufzeichnungsmedium die Kontur des ursprünglichen Kontaktbereichs (14'') beibehält und das Flächenprofil der Oberfläche konstant bleibt.

2. Magnetische Wandlereinheit nach Anspruch 1, dadurch gekennzeichnet, daß die Ausleger (117, 119) symmetrisch zu dem magnetischen Wandlerelement (121) angeordnet sind.

## Revendications

1. Système d'enregistrement comportant un ensemble transducteur magnétique (113) qui comprend :
a. un moyen pour transporter un support d'enregistrement (116) sur ledit ensemble transducteur (113), ledit ensemble ayant un élément transducteur magnétique (121) placé sur celui-ci,
b. un moyen externe audit ensemble transducteur magnétique pour guider (114, 118) ledit support d'enregistrement (116) sous des angles de guidage nominaux (124) par rapport audit élément transducteur magnétique (121),
c. une surface en forme d'arc se prolongeant dans la direction dudit défilement du support, et comportant deux encoches (129, 131) dans celle-ci, lesdites encoches (129, 131) divisant ladite surface en un premier écarteur-support (119), un plateau central (115) pour contenir ledit élément transducteur magnétique (121) au sommet de celui-ci, et un second écarteur-support (117), dans lesquels
A) les bords (128, 126) des deux encoches (129, 131) empêchent l'entraînement de l'air entre ledit support (116) et ledit élément transducteur magnétique (121),
B) lesdits écarteurs-support (117, 119) positionnent ledit support (116) de façon à maintenir lesdits angles de guidage nominaux (124) pratiquement indépendants des variations dans lesdits moyens pour le guidage (114, 118), ledit ensemble transducteur (113) est caractérisé en ce que :
ladite surface en forme d'arc étant initialement formée de sorte que tous les points de la surface de l'ensemble transducteur soient sous une pression identique pendant un fonctionnement normal de la tête, de sorte que l'usure dudit ensemble transducteur soit uniforme pendant la durée de vie de la tête et que le profil au niveau de la région de contact ensemble transducteur/support (14''') conserve le profil de la région de contact d'origine (14''), d'où il résulte que ladite surface conserve un profil d'aire constante.

2. Assemblage de transducteur magnétique selon la revendication 1, dans lequel lesdits écarteurs-support (117, 119) sont placés symétriquement par rapport audit élément transducteur magnétique (121).
